# EUROPÄISCHE PATENTSCHRIFT

(11) **EP 1 133 106 B1**
(45) Veröffentlichungstag und Bekanntmachung des Hinweises auf die Patenterteilung: **20.09.2006**
(21) Anmeldenummer: 01100240.9
(22) Anmeldetag: 03.01.2001
(51) Int. Cl.: G05B 19/418, H04L 12/403, G05B 19/042, H04L 12/433

(54) **Vorrichtung zum Steuern des Datenaustauschs in einem Kommunikationsteilnehmer**
Device for controlling the data exchange in a communication terminal
Dispositif de commande d'échange de données dans un terminal de communication

(30) Priorität: 12.02.2000 DE 10006265
(43) Veröffentlichungstag der Anmeldung: 12.09.2001
(73) Patentinhaber: PHOENIX CONTACT GmbH & Co. Kg, 32825 Blomberg (DE)
(72) Erfinder: Prüssner, Matthias, Dipl.-Ing., 32547 Bad Oeynhausen (DE); Schewe, Frank, Dipl.Ing., 32120 Hiddenhausen (DE); Detert, Volker, Dipl.-Ing., 32278 Kirchlengern (DE); Türke, Claus, Prof. Dr.-Ing., 32657 Lemgo (DE)
(74) Vertreter: Herden, Andreas F.

(56) Entgegenhaltungen:
- H. SCHWEINZER, W. KANDLER: "Shared Data on Interbus" SHARED DATA ON INTERBUS, [Online] 1999, Seiten 1-8, XP002269738 Gefunden im Internet: <URL:http://www.ict.tuwien.ac.at/komzent/i nterbus/SharedData.pdf> [gefunden am 2004-02-10]
- TUERKE C: "INTERBUS-S IN DER REGELSCHLEIFE DATENTRANSFER VON SLAVE ZU SLAVE MACHT'S MOEGLICH" ELEKTRONIK, FRANZIS VERLAG GMBH. MUNCHEN, DE, Bd. 44, Nr. 12, 13. Juni 1995 (1995-06-13), Seiten 79,81-84, XP000515422 ISSN: 0013-5658

## Beschreibung

Die Erfindung betrifft eine Vorrichtung zum Steuern des Datenaustauschs eines Kommunikationsteilnehmers eines seriellen Master-Slave-Kommunikationssystems, ein Verfahren zum Betrieb einer derartigen Vorrichtung sowie einen mit der Vorrichtung ausgestatteten Kommunikationsteilnehmer.

Heutige Steuer- und Datenübertragungsanlagen werden in vielfältiger Weise für die industrielle Automatisierungstechnik verwendet. Derartige Systeme sind häufig als Master-Slave-Kommunikationssysteme mit einem Datenbus, insbesondere mit einem Feldbus ausgebildet, über welchen Kommunikationsdaten seriell übertragen werden. Dabei sind die verschiedenen Kommunikationsteilnehmer alle an den Datenbus angeschlossen und werden zentral von einem überlagerten System gesteuert. Im Vergleich zu anderen Arten von Anlagen, bei welchen die verschiedenen Kommunikationsteilnehmer wie Sensoren und Aktoren jeweils über eigene Leitungen an das überlagerte Steuerungssystem angeschlossen sind, wird der Verkabelungsaufwand des gesamten Kommunikationssystems stark verringert. Weiterhin weist das zur Kommunikation verwendete Master/Slave-Buszugriffsverfahren gegenüber den auch üblichen CSMA/CD- oder Token Passing- Verfahren den Vorteil der Echtzeitfähigkeit auf, weshalb beispielsweise auch Regelungssysteme mit seriellen Master/Slave Kommunikationssystemen aufgebaut werden können.

Die strikte Trennung der Kommunikationsteilnehmer in einen Master, welcher den Buszugriff bzw. den Datenfluss zu und von den Slaves steuert, und die Slaves, welche nur in definierter, vom Master vorgegebener Weise auf den gemeinsamen Kommunikationsbus zugreifen, kann jedoch in bestimmten Situationen negative Auswirkungen auf die Anpassung an spezielle Kommunikationsanforderungen des Systems haben, insbesondere müssen Kommunikationsbeziehungen teilweise kompliziert und umständlich realisiert werden.

Aus diesem Grund besteht der Bedarf, die Kommunikationsmöglichkeiten innerhalb eines seriellen Master/Slave-Kommunikationssystems zu erweitern ohne die genannten Vorteile zu stark zu mindern bzw. aufzuheben. Hierzu wird in dem Aufsatz "Interbus-S in der Regelschleife", Elektronik, Heft Juni 1995, ein serielles Master/Slave-Kommunikationssystem offenbart, in welchem durch eine spezielle Hardwareausbildung der Teilnehmer ein direkter Datentransport von einem Slave-Kommunikationsteilnehmer zu einem anderen Slave-Kommunikationsteilnehmer ermöglicht wird, was in einem klassischen System nur mittels einer Datenübertragung unter Einschluß des Masters ausgeführt werden kann. Diese Erweiterung ist jedoch für viele Kommunikationsanforderungen nicht ausreichend. Ein ähnliches System wird auch in H. Schweinzer, W. Kandler, "Shared Data on Interbus" in "Fieldbus Technology: Systems Integration, Networking and Engineering Proccedings of the Fieldbus Conference Fet'99", Springer-Verlag, New York, 1999 beschrieben

Der Erfindung liegt daher die Aufgabe zugrunde, die Basis für ein serielles Master/Slave-Kommunikationssystem bereitzustellen, welches flexibel auf Kommunikationsanforderungen eingestellt werden kann ohne die genannten Vorteile eines herkömmlichen Systems zu stark einzuschränken.

Diese Aufgabe wird bereits durch eine Vorrichtung zum Steuern des Datenaustauschs eines Kommunikationsteilnehmer eines seriellen Master/Slave-Kommunikationssystems nach Anspruch 1, einen zugeordneten Kommunikationsteilnehmer mit einer derartigen Vorrichtung nach Anspruch 5 bzw. durch ein Verfahren zum Steuern des Datenaustauschs mit einer solchen Vorrichtung nach Anspruch 7 gelöst.

Durch die Bereitstellung einer Vorrichtung zum Steuern des Datenaustauschs eines Kommunikationsteilnehmers, die zum Ersetzen von vorbestimmten Kommunikationsdaten eingerichtet ist, wird erreicht, dass der betreffende Kommunikationsteilnehmer aktiv in den Kommunikationsdatenfluß eingreifen kann, was über das nach dem Stand der Technik bekannte Lesen seiner vom Master gesendeten Eingangsdaten und Senden seiner eigenen Ausgangsdaten zum Master hinausgeht. Die Realisierung vom spezifischen Kommunikationsverbindungen zwischen bestimmten, vorgegebenen Teilnehmern wird ermöglicht und eine hohe Flexibilität an beliebige Kommunikationsanfordernisse bereitstellt.

Zur Festlegung der zu sendenden Kommunikationsdaten kann die erfindungsgemäße Vorrichtung eine Speichereinrichtung aufweisen, in welcher die Daten, mit denen die ausgewählten Kommunikationsdaten überschrieben werden sollen, abspeicherbar sind. Um die zu ersetzenden Kommunikationsdaten festzulegen und zu bestimmen, weist die erfindungsgemäße Vorrichtung eine Steuereinrichtung zum Auswählen der zu ersetzenden Kommunikationsdaten auf.

Um die zu ersetzenden Kommunikationsdaten festzulegen, kann die erfindungsgemäße Vorrichtung eine Zählereinrichtung, insbesondere zur Erfassung der Anzahl von der Vorrichtung zugeführten und/oder durch die Vorrichtung hindurch geführten Kommunikationsdaten, eine Steuertabelle und eine Einrichtung zum Vergleichen des Zählerwertes mit einem in der Steuertabelle abgelegten Wert aufweisen, wobei die Einrichtung zum Ersetzen der ausgewählten Kommunikationsdaten im Ansprechen auf den Vergleich angesteuert wird.

Um die als Datenwörter abgespeicherte Daten in Bit-serielle Kommunikationsdaten zu konvertieren, die in den Kommunikationsdatenfluss einführbar sind, kann die erfindungsgemäße Vorrichtung einen parallel/seriell-Wandler aufweisen.

Um die Einsatzmöglichkeit und die Flexibilität der erfindungsgemäßen Vorrichtung weiter zu erhöhen, kann diese zum Kopieren von der Vorrichtung zugeführten oder durch die Vorrichtung hindurchgeführten Kommunikationsdaten ausgebildet sein. Hierzu weist die erfindungsgemäße Vorrichtung eine Steuereinrichtung zum Auswählen von zu kopierenden Kommunikationsdaten, eine Einrichtung zum Kopieren der ausgewählten Kommunikationsdaten und eine Speichereinrichtung zum Abspeichern der kopierten Daten auf. Ein mit der erfindungsgemäßen Vorrichtung ausgestatteter Kommunikationsteilnehmer ist somit auch in der Lage, vom Master zu einem beliebigen Slave bzw. von einem beliebigen Slave zum Master gesendete Kommunikationsdaten zu kopieren und nachfolgend einer eigenen Verarbeitung zuzuführen. Damit lässt sich auch auf einfache Weise eine Kommunikationsbeziehung zwischen zwei Slaves aufbauen, ohne den bei klassischen Master/Slave-Systemen notwendigen Umweg über den Master durch eine sogenannten Kommunikationsbeziehung mit Querverkehr in Anspruch zu nehmen. Hierfür muss der Producer-Slave seine Daten nur in den Kommunikationsdatenfluss einschreiben und der Consumer-Slave die entsprechenden Daten aus dem Kommunikationsdatenfluss lesen. Ein Datenaustausch zwischen beliebigen Teilnehmern, die mit der erfindungsgemäßen Vorrichtung ausgerüstet sind, lässt sich damit in genau einem Kommunikationszyklus durchführen, während bei einem Datenaustausch zwischen zwei Slaves mit Querverkehr über dem Master zumindest zwei Kommunikationszyklen notwendig sind. Durch die Erfindung werden Producer-Consumer-Kommunikationsbeziehungen in einem Master-Slave-Kommunikationssystem ermöglicht, d.h. die von einem Kommunikationsteilnehmer als Producer erzeugte Information kann von beliebig vielen anderen Kommunikationsteilnehmern als Consumer gelesen und verarbeitet werden.

Sind mehrere Kommunikationsteilnehmer mit der erfindungsgemäßen Vorrichtung ausgestattet, kann ein mit diesen Teilnehmern aufgebautes Master/Slave-Kommunikationssystem realisiert werden, welches mehrere Master/Slave-Gruppen aufweist, wobei die Kommunikationsteilnehmer, welche eine erfindungsgemäße Vorrichtung aufweisen, immer innerhalb einer einzelnen Gruppe als Master fungieren. Um den Buszugriff und die Buskonfigurierung zu steuern, kann in einem solchen komplexen aber sehr flexiblen System mit mehreren Master/Slave-Gruppen ein einzelner Teilnehmer als Arbiter zum Konfigurieren und zum Steuern des Datenbus eingerichtet sein.

Um die durch die erfindungsgemäße Vorrichtung hindurch geführten und/oder der Vorrichtung zugeführten Kommunikationsdaten zugänglich zu machen, bzw. einen Datenaustausch zu ermöglichen, kann vorgesehen sein, dass zwischen dem Kommunikationsdateneingang und dem Kommunikationsdatenausgang der Vorrichtung zumindest ein Schieberegister zum Aufnehmen von Kommunikationsdaten angeordnet ist. Die im Schieberegister befindlichen Daten können dann jeweils kopiert bzw. ersetzt werden.

Ein Vorteil der erfindungsgemäßen Vorrichtung ist weiterhin, dass sich mit dieser auch ein bei einem Teilnehmer eines klassischen seriellen Master-Slave-Übertragungssystem auftretender Datenaustausch durchführen lässt, da die Speichereinrichtung zum Ersetzen von Kommunikationsdaten auch zum Senden der Ausgangsdaten des Teilnehmers bzw. die Einrichtung zum Kopieren von Kommunikationsdaten auch zum Empfang der Eingangsdaten des Teilnehmers ausgebildet werden kann. Dies gilt insbesondere für ein Master-Slave-Kommunikationssystem mit einer Datenübertragung mittels eines Summenrahmenprotokolls, wobei zu Beginn eines Kommunikationsdatenzyklus die Ausgangsdaten des Kommunikationsteilnehmers gesendet und am Ende des Kommunikationsdatenzyklus die Eingangsdaten empfangen werden.
Somit können mit einer entsprechend ausgebildeten erfindungsgemäßen Vorrichtung alle spezifischen Prozeduren zum Datenaustausch eines Kommunkationsteilnehmers ausgeführt werden, eine Zusatzeinrichtung zur Ausführung der Standard-Prozeduren kann entfallen.

Um in einer Projektierungsphase dem einzelnen Kommunikationsteilnehmer Informationen über alle anderen Teilnehmer verfügbar zu machen, kann in einem ID-Kommunikationszyklus zu Beginn der ID-Code von der jeweiligen erfindungsgemäßen Vorrichtung bzw. des Kommunikationsteilnehmers gesendet werden und nachfolgend im Kommunikationszyklus durch die Vorrichtung hindurchgeschobene ID-Daten oder der Vorrichtung zugeführte ID-Daten der anderen Teilnehmer von der Vorrichtung kopiert werden, so dass jeder Teilnehmer über den genauen Aufbau des Kommunikationssystems informiert ist.

Um die Steuereinrichtungen zum Auswählen von zu ersetzenden Kommunikationsdaten und/oder die Steuereinrichtungen zum Auswählen von zu kopierenden Kommunikationsdaten zu projektieren und parametrieren, kann ein entsprechender Kommunikationszyklus vorgesehen sein, in dem die jeweiligen Vorrichtungen bzw. Kommunikationsteilnehmern die notwendigen Steuerdaten, insbesondere zum Abspeichern in jeweilige Steuertabellen, empfangen. Auf diese Weise kann ein die erfindungsgemäße Vorrichtung aufweisender Kommunikationsteilnehmer als Slave oder als Master projektiert werden. Es ist damit durch eine zugeordnete Projektierung auch möglich, auf eine geänderte Kommunikationsanforderung dergestalt zu reagieren, dass die Teilnehmer zu anderen Master/Slave-Gruppierungen zusammengestellt werden oder beispielsweise nur eine Master/Slave-Gruppe mit allen Teilnehmern projektiert wird.

Die Erfindung wird im Folgenden durch das Beschreiben einiger Ausführungsformen unter Bezugnahme auf die Zeichnungen erläutert, wobei
Fig. 1 in einem Blockschaltbild eine Ausführungsform der erfindungsgemäßen Vorrichtung und
Fig. 2 ein Master/Slave-Kommunikationssystem mit Kommunikationsteilnehmern in einer Prinzipskizze zeigt, welche zumindest teilweise die erfindungsgemäße Vorrichtung aufweisen.

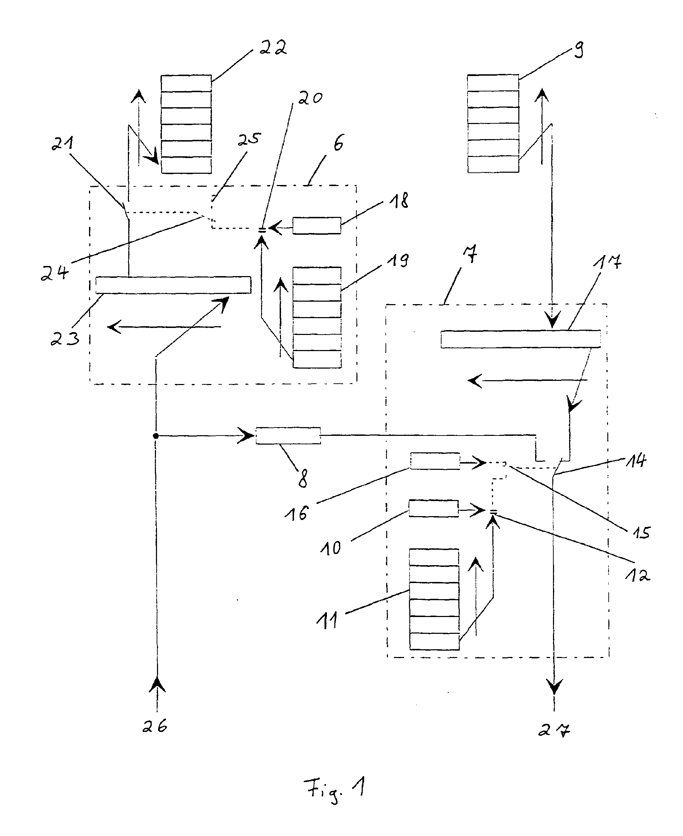

Fig. 1 zeigt eine Ausführungsform der erfindungsgemäßen Vorrichtung, welche in einem Kommunikationsteilnehmer eines Master/Slave-Kommunikationssystem mit serieller Übertragung über einen gemeinsamen Datenbus verwendet werden kann. Dabei erfolgt innerhalb eines Kommunikationszyklus die Übertragung eines Datentelegramms mit einem Summenrahmenprotokoll durch alle Teilnehmer, wie es beispielsweise im Kommunikationssystem nach EN 50254 der Fall ist, auf das im Folgenden Bezug genommen wird.

Die Vorrichtung weist einen Dateneingang 26 auf, an den ein nach dem FIFO-Prinzip arbeitendes Schieberegister 8 angeschlossen ist. Ist der hinter dem FIFO-Register angeordnete Schalter 14 auf Durchgang geschaltet, d.h. auf seiner linken Stellung, können die durch das FIFO-Register innerhalb eines Kommunikationszyklus hindurchgeschobenen Kommunikationsdaten die Vorrichtung über den Ausgang 27 verlassen. Die als Abschnitte des Datentelegramms in das FIFO-Register eingeführten Kommunikationsdaten werden demnach nicht verändert, was dem Ablauf innerhalb eines Kommunikationszyklus im beschriebenen Master/-Slave-Kommunikationssystem nach dem Stand der Technik entspricht.

Die Zuordnung des Schieberegisters 8 zur erfindungsgemäßen Vorrichtung ist nicht zwingend, sondern erfolgt nur zum Zwecke der Klarheit der Darstellung. Das Register kann auch in einer anderen Vorrichtung des Kommunikationsteilnehmers angeordnet sein, insofern werden in diesem Fall die Kommunikationsdaten der erfindungsgemäßen Vorrichtung beispielsweise von einem externen Schieberegister zugeführt.

Weiterhin weist die in Fig. 1 dargestellte erfindungsgemäße Vorrichtung einen Speicher 9 auf, der über einen parallel/seriell-Wandler 17 an einen Dateneingang des Schalters 14 angeschlossen ist. Demnach kann in Abhängigkeit der Stellung des Schalters 14 ein in der Einrichtung 9 gespeichertes Datenwort nach einer Umwandlung in bitserielle Daten am Ausgang 27 der Vorrichtung ausgegeben werden.

Diese Ausgabe von bitseriellen Daten innerhalb eines Kommunikationszyklus hat letztlich zur Folge, dass ein Abschnitt des Datentelegramms durch ein in der Einrichtung 9 abgespeichertes Datenwort ersetzt wird. Die Entscheidung, ob ein Teil des durch die Vorrichtung hindurchgeschobenen Datentelegramms ersetzt wird oder nicht, ist von der Stellung des Schalters 14 abhängig. Dieser Schalter 14 wird durch die Einrichtung 12 gesteuert, welche zum Vergleichen von Zahlen eingerichtet ist und im Ansprechen auf den Vergleich den Schalter 14 ansteuert.

Eingangswerte erhält die Einrichtung 12 durch einen Zähler 10 und eine Steuertabelle 11. Die Zählereinrichtung 10 erfasst die Anzahl der innerhalb eines Kommunikationszyklus durch das Schieberegister 8 geschobenen Kommunikationsdaten. In der Steuertabelle 11 ist dem jeweiligen Kommunikationszyklus zumindest ein Wert zugeordnet abgelegt, der in der Einrichtung 12 mit dem Momentanwert der Zählereinrichtung 10 verglichen wird. Liegt eine Identität vor, so steuert die Einrichtung 12 den Schalter 14 zum Ersetzen des ausgewählten Kommunikationsdatenabschnittes an. Dabei werden Datenworte aus dem Speicher 9 in den parallel/seriell-Wandler geladen und von dort zeichenweise in den Ausgangsdatenstrom eingefügt. Während des Schiebebetriebs werden auf die beschriebene Art ausgewählte Kommunikationsdaten aus dem Datenfluss entfernt und durch vorbestimmte andere Daten ersetzt. Anschließend werden wieder Zeichen aus dem FIFO-Register gesendet, bis wiederum im Ansprechen auf die Steuertabelle 11 ein Teil des Eingangsdatenstroms ersetzt wird.

Zur Vereinfachung des Auswählvorganges kann der Schalter 14 auch mittels einer Auswahleinrichtung 15 in Abhängigkeit des Inhalts eines erniedrigbaren Zählregisters 16 angesteuert werden, in welchem ein Datenwort ablegbar ist, das die Anzahl der zu ersetzenden Kommunikationsdatenwörter angibt. Das Register 16 wird dabei mit einem in der Steuertabelle 11 abgelegten Datenwort für den jeweiligen Kommmunikationszyklus geladen.

Durch die innerhalb des Rahmens 7 befindlichen Einrichtungen ermöglicht die beschriebene Ausführungsform der erfindungsgemäße Vorrichtung somit eine aktive Einflussnahme eines mit der Vorrichtung ausgestatteten Teilnehmers auf den Datenfluss innerhalb des Master/Slave-Kommunikationssystem.

Zusätzlich umfasst die in Fig. 1 dargestellte erfindungsgemäße Vorrichtung eine Speichereinrichtung 22, in welcher in vorbestimmter Weise Kommunikationsdaten aus dem Eingangsdatenstrom ablegbar sind. Hierzu weist die Vorrichtung einen seriell/parallel-Wandler 23 auf, welcher den Eingangsdatenstrom in Einheiten fester Länge zusammenfasst. In Abhängigkeit der Stellung des Schalters 21 werden alle bzw. im Ansprechen auf eine Vergleichereinrichtung 20, welche den Schalter 21 ansteuert, vorbestimmte Kommunikationsdaten aus dem Eingangsdatenstrom kopiert. An den beiden Eingängen der Vergleichereinrichtung 20 liegt der Ausgang einer Steuertabelle 19 bzw. der Ausgang eines Zählers 18 an. In der Steuertabelle 19 sind Daten abgelegt, die bestimmten Kommunikationsdaten im Eingangsdatenstrom zugeordnet sind und die Zählereinrichtung 17 wiederum zählt die durch die Vorrichtung geschobenen Datenworte oder -abschnitte. Wird im Vergleicher 20 festgestellt, dass das sich momentan in der Vorrichtung befindliche Datenwort dem zu kopierenden entspricht, wird der Schalter 21 zum Kopieren des vorbestimmten Datenwortes in die Speichereinrichtung 22 angesteuert. Wie vorstehend schon erwähnt, besteht auch die Möglichkeit, den Schalter 21 zum permanenten Kopieren des Eingangsdatenstroms unabhängig von der Zählereinrichtung 18 anzusteuern. Hierzu wird die Auswahleinrichtung 24 auf 25 umgelegt, was den Schalter 21 zum permanenten Abspeichern ansteuert.

Durch die innerhalb des Rahmens 6 befindlichen Einrichtungen ermöglicht die beschriebene Ausführungsform der erfindungsgemäße Vorrichtung somit das nach dem Stand der Technik bekannte und eingangs beschriebene Kopieren von vorbestimmten Daten des durch das FIFO-Register 8 hindurchgeschobenen Datentelegramms.

Weiterhin ermöglicht die beschriebene Ausführungsform der erfindungsgemäße Vorrichtung auch den herkömmlichen Datenaustausch zwischen den Teilnehmern des Kommunikationssystems, bei welchem zuerst die Ausgangsdaten des Teilnehmers gesendet, danach die empfangenen Daten der anderen Teilnehmer weitergeleitet werden und zum Schluss des Kommunikationszyklus die Eingangsdaten im FIFO-Register des jeweiligen Teilnehmers stehen. Dies wird mit der erfindungsgemäßen Vorrichtung dadurch erreicht, dass zu Beginn des Kommunikationszyklus die Ausgangsdaten des Teilnehmers in den Parallel/Seriell-Wandler 17 geladen und von dort über den Schalter 14 zeichenweise in den Ausgangsdatenstrom eingefügt werden. Anschliessend werden im Schiebebetrieb die im FIFO 8 befindlichen Daten des Datenstrom gesendet. Die zum Schluß des Kommunikationszyklus im FIFO 8 stehenden Eingangsdaten des Teilnehmers können durch entsprechendes Ansteuern des Schalters 21 kopiert werden und stehen für eine weitere Verarbeitung zur Verfügung. Demnach läßt sich der gesamte Datenaustausch eines Kommunikationsteilnehmers mit der in Fig. 1 dargestellten erfindungsgemäßen Vorrichtung ausführen.

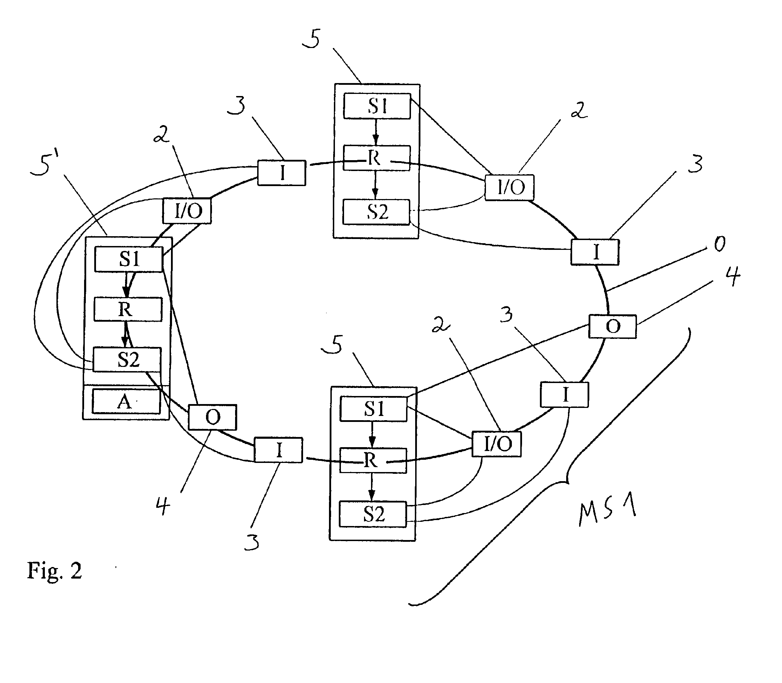

Der Betrieb der erfindungsgemäßen Vorrichtung wird im Folgenden für den Einsatz in einem Kommunikationsteilnehmer eines beispielhaften seriellen Master/Slave-Übertragungssystems der in Fig. 2 gezeigten Art beschrieben. Das System arbeitet nach dem Master-Slave-Prinzip mit der Topologie eines Ringschieberegisters, wobei alle Kommunikationsteilnehmer 2, 3, 4, 5, 5' mit ihrem jeweiligen Schieberegister Teil des als Schieberegisterring ausgebildeteten Datenbus 0 sind.

Innerhalb eines Kommunikationszyklus werden die Eingangsdaten von einem ausgezeichneten Kommunikationsteilnehmer zu den jeweiligen anderen Kommunikationsteilnehmern übermittelt und deren Ausgangsdaten zum ausgezeichneten, in Fig. 2 mit 5' bezeichneten Kommunikationsteilnehmer übertragen. Dieser ausgezeichnete Kommunikationsteilnehmer 5' konfiguriert und steuert den Buszugriff aller anderen Teilnehmer, die Funktionalität des Arbiters A als Busmaster ist auf diesen Teilnehmer 5' beschränkt. Der Arbiter-Teilnehmer 5' startet die Kommunikationszyklen und weist allen Teilnehmern eine logische Moduladresse zu, welche auf den Teilnehmern temporär oder statisch gespeichert werden kann.

Während der Übertragung des Summenrahmens innerhalb eines Kommunikationszyklus wird der Datenstrom durch die Teilnehmer geführt. Jedes vom jeweiligen Teilnehmer empfangene Zeichen wird in einem dem Teilnehmer zugeordneten FIFO 8 (s. Fig. 1) gespeichert und dafür ein Zeichen aus dem FIFO gesendet, wobei die FIFO-Breite der jeweiligen Teilnehmerdatenbreite entspricht. Beim verwendeten Master/Slave-Summenrahmenverfahren werden vor Beginn des Zyklus die Ausgangsdaten, d.h. die Sendedaten der Teilnehmer in das jeweilige FIFO-Register geladen und am Ende des Zykluss stehen die Eingangsdaten der Teilnehmer im jeweiligen FIFO-Register bereit, es erfolgt ein bidirektionaler Datenaustausch zwischen dem Busmaster und allen anderen Slave-Teilnehmern in einem Kommunikationszyklus. Die in Fig. 2 dargestellten Teilnehmern 2, 3, 4, 5, 5' sind für einen solchen standardmäßigen Datenaustausch ausgebildet, bei welchem der Arbiter-Teilnehmer 5' die Eingangsdaten zu den Teilnehmern sendet und von diesen ihre Ausgangsdaten erhält.

Zur Erweiterung der Funktionalität sind die Kommunikationsteilnehmer 5 und 5' mit der erfindungsgemäßen Vorrichtung ausgestattet. Der Arbiter-Kommunikationsteilnehmer 5' weist eine erfindungsgemäße Vorrichtung zum Ersetzen von Kommunikationsdaten auf, die auch zum Kopieren von Daten ausgebildet ist, welche durch ihn hindurchgeführt werden. Die beiden Teilnehmer 5 unterscheiden sich vom Arbiter-Teilnehmers 5' nur durch das fehlende Arbiter-Modul A.

Die anderen, mit 2, 3 oder 4 bezeichneten Kommunikationsteilnehmer des Kommunikationssystems sind nicht zum Ersetzen von Kommunikationsdaten eingerichtet, jedoch zum Kopieren von Kommunikationsdaten ausgebildet. Demzufolge sind die im Rahmen 6 (s. Fig. 1) eingeschlossenen Einrichtungen auch in den Teilnehmern 2, 3 und 4 integriert. Somit können alle Teilnehmer des dargestellten Kommunikationssystems eine Producer-Consumer Kommunikationsverbindung untereinander aufbauen, ohne dass der Arbiter-Teilnehmer 5' in die Kommunikationsverbindung eingebunden werden muß. Hierzu wird der Eingangsdatenstrom in jedem Teilnehmer im Seriell/Parallel-Wandler 23 in Einheiten fester Länge als Datenwort zusammengefaßt und abhängig von der Schalterstellung des Schalters 21 (s. Fig. 1) die Kommunikationsdaten aus dem Eingangsdatenstrom kopiert.

Diese Betriebsart wird in einem ID-Zyklus dazu verwendet, dass jeder Kommunikationsteilnehmer ein Abbild des Kommunikationssystem erhält. Hierzu senden vor Beginn des Zyklus alle Teilnehmer ihren ID-Code, d.h. sie legen ihren jeweiligen ID-Code durch Einschreiben in das FIFO-Register in den Ring und kopieren während des Zyklus alle durch sie hindurchgeschobenen ID-Codes der anderen Teilnehmer. Jeder Teilnehmer verfügt danach über Informationen, die den Busaufbau der aktuellen Konfiguration widerspiegeln.

In einer danach folgenden Projektierungsphase werden von dem Arbiter- Kommunikationsteilnehmer 5' Projektierungsdaten zu den einzelnen Teilnehmern gesendet, wobei der Arbiter dabei das im vorhergehenden ID-Zykluss erhaltene Abbild des Kommunikationssystems verwendet. Beispielsweise können in mehreren Projektierungszyklen die Daten für die Tabellen der Steuereinrichtung zum Auswählen von zu ersetzenden Kommunikationsdaten bzw. zu kopierenden Kommunikationsdaten zu den jeweiligen Teilnehmern gesendet werden. Das Verhalten aller Kommunikationsteilnehmer in den verschiedenen Kommunikationszyklen kann auf diese Weise festgelegt werden.

Beispielsweise ist es möglich neben dem Arbiter-Kommunikationsteilnehmer 5', welcher dem klassischen Master in einem herkömmlichen Master/Slave-Übertragungssystem entspricht, weitere Kommunikationsteilnehmer durch die Projektierung so einzustellen, dass sie aufgrund ihrer Fähigkeit zum Ersetzen von Kommunikationsdaten als Master für andere vorgegebene und vorbestimmte Kommunikationsteilnehmer arbeiten. Demnach können mehrere voneinander unabhängige Master/Slave-Gruppen innerhalb des gesamten Kommunikationssystems projektiert werden.

In dem in Fig. 2 dargestellten Beispiel sind 3 Master/Slave-Gruppierungen projektiert, wobei die Master mit 5 bzw. 5' bezeichnet sind. Zur Übersichtlichkeit ist nur eine Master/Slave-Gruppe mit dem Bezugszeichen MS1 angegeben.
Der Master 5 der Gruppe MS1 trägt wie obenstehend beschrieben nichts zur Bussteuerung des Systems bei, für die ihm zugeordneten 3 Slaves steuert er jedoch den Datenverkehr. Slave 2 ist als Ein/Ausgabe-, Slave 3 als Eingabe- und Slave 4 als Ausgabeteilnehmer ausgebildet. Der Master weist eine Speichereinrichtung S1 für die Ausgangsdaten der beiden Slaves 2 und 4, sowie eine Speichereinrichtung S2 für die Eingangsdaten seiner Slaves 2 und 3 auf. Zur Verdeutlichung sind in Fig. 2 die Register S1 bzw. S2 mit den jeweiligen Slaves durch eine Linie direkt verbunden, der eigentliche Datenverkehr verläuft jedoch wie beschrieben über den gemeinsamen Datenbus 0. Die jeweiligen Slaves erhalten ihre Eingangsdaten vom ihnen zugeordneten Master, indem dieser die zum jeweilgen Slave gesendeten Daten ersetzt und er erhält die Ausgangsdaten seiner Slaves, indem er die von den Slaves gesendeten Daten kopiert. In diesem Sinne erhält der Master die Ausgangsdaten seiner zugeordneten Slaves mittels der über eine Steuertabelle aktivierten Kopierfunktion und sendet die Eingangsdaten zu seinen Slaves durch ein den Slaves zugeordnetes, über eine Steuertabelle aktiviertes Ersetzen der Kommunikationsdaten, welche mit einem Summenrahmenprotokoll innerhalb eines Kommunikationszyklus durch den Master hindurchgeführt werden.

Die mit der erfindungsgemäßen Vorrichtung ausgestatteten Kommunikationsteilnehmer 5, 5' unterstützen jeweils 4 verschiedene Zyklusarten. In einem Standard-ID-Zykluss sendet der Arbiter-Teilnehmer 5' eine vorgegebene Anzahl an SteuerDaten für die anderen Teilnehmer und empfängt die gleiche Anzahl von ID-Codes der Teilnehmer. Die Teilnehmer 5 senden zu Anfang ihre ID-Codes und leiten anschließend die empfangenen Daten weiter. Am Ende des Zyklus steht das vom Arbiter-Teilnehmer gesendete Steuerwort im Register.

Im Standart-Daten-Zyklus sendet der Arbiter-Teilnehmer 5' die Eingangsdaten für die anderen Teilnehmer und empfängt die gleiche Anzahl von Ausgangsdaten von den Teilnehmern. Die Teilnehmer 5 senden zu Beginn des Kommunikationszyklus ihre Ausgangsdaten aus dem Speicher 9 und leiten anschließend die empfangenen Daten weiter, wobei nach dem Zyklusende ihre Eingangsdaten im FIFO-Register stehen. In beiden Standard-Zyklen dient das jeweilige FIFO-Register in den Teilnehmern als temporärer Datenspeicher für die unverändert weiterzuleitenden Daten. Alle empfangenen Daten werden dabei um die Teilnehmerdatenbreite, d.h. die FIFO-Tiefe verzögert weitergereicht.

In den beiden anderen Zyklen, einem speziellen ID-Zyklus und einem speziellen Datenzyklus verhalten sich der Arbiter-Teilnehmer 5' und die beiden anderen Master-Teilnehmer 5 gleich. Wie obenstehend schon erläutert, senden im ID-Zyklus alle Teilnehmer 5, 5' ihren ID- Code zu Beginn aus ihrem Speicher 9 und anschließend aus dem FIFO-Register 8 die darauffolgend empfangenen Daten. Weiterhin werden alle empfangenen Daten, d.h. alle ID-Codes der anderen Teilnehmer in den Empfangsspeicher 22 kopiert.
Im neuen Datenzyklus können die empfangenen Daten während der Schiebephase des Zyklus kopiert oder ersetzt werden. Die Auswahl der zu kopierenden bzw. der zu ersetzenden Daten erfolgt anhand der jeweiligen Steuertabelle 11 bzw. 19.

Die erfindungsgemäße Vorrichtung kann in Kommunikationsteilnehmern von vielen seriellen Master/Slave-Kommunikationssystemen Verwendung finden. Insofern ist der beschriebene Einsatz in einem nach EN 50254 normierten System nur als beispielhaft anzusehen.

## Patentansprüche

1. Vorrichtung zum Steuern des Datenaustauschs eines Kommunikationsteilnehmers eines seriellen Master-Slave-Kommunikationssystems,
mit
- einer Steuereinrichtung zum Auswählen von zu ersetzenden Kommunikationsdaten,
- einer Einrichtung zum Ersetzen der ausgewählten Kommunikationsdaten durch zu sendende Kommunikationsdaten,
- eine Steuereinrichtung (18, 19, 20, 24, 25) zum Auswählen von zu kopierenden Kommunikationsdaten,
- eine Einrichtung (23, 21) zum Kopieren der ausgewählten Kommunikationsdaten und
- eine Speichereinrichtung (22) zum Abspeichern von kopierten Kommunikationsdaten, **gekennzeichnet durch** zumindest ein zwischen einem Kommunikationsdateneingang (26) und einem Kommunikationsdatenausgang (27) angeordnetes Schieberegister (8) zum Aufnehmen von Kommunikationsdaten,
wobei die Einrichtung zum Kopieren von ausgewählten Kommunikationsdaten am Eingang des zumindest einen Schieberegisters (8) angeordnet und die Einrichtung zum Ersetzen von ausgewählten Kommunikationsdaten am Ausgang des Schieberegisters (8) angeordnet ist, und die Vorrichtung eingerichtet ist, ein Datentelegramm innerhalb eines Kommunikationsdatenzyklus abschnittsweise **durch** das zumindest eine Schieberegister (8) hindurchzuführen.

2. Vorrichtung nach Anspruch 1,
**dadurch gekennzeichnet, dass** die Vorrichtung zum Betrieb in Kommunikationszyklen eingerichtet ist und dieser innerhalb eines Kommunikationszyklus ein Kommunikationsdaten umfassendes Datentelegramm abschnittsweise zugeführt und/oder durch diese hindurchgeführt wird.

3. Vorrichtung nach Anspruch 1 oder 2,
**dadurch gekennzeichnet, dass** die Steuereinrichtung zum Auswählen von zu ersetzenden Kommunikationsdaten
- eine Zählereinrichtung (10),
- eine Steuertabelle (11) und
- eine Einrichtung (12) zum Vergleichen von Zählerwerten mit in der Steuertabelle abgelegten Werte aufweist, wobei in der Steuertabelle Daten zum Festlegen der zu ersetzenden Kommunikationsdaten abgelegt und mit der Zählereinrichtung (10) die durch die Vorrichtung hindurchgeführten und/oder dieser zugeführten Kommunikationsdaten abgezählt werden.

4. Vorrichtung nach Anspruch 1, 2 oder 3,
**gekennzeichnet durch** eine Speichereinrichtung (9) zum Speichern von zu sendenden Kommunikationsdaten und einen Parallel/Seriell-Wandler (17) zum Wandeln der gespeicherten Daten in bit-serielle Kommunikationsdaten.

5. Kommunikationsteilnehmer (5, 5') eines seriellen Master-Slave-Kommunikationssystems, welcher eine Vorrichtung zum Steuern des Datenaustauschs nach einem der Ansprüche 1 bis 4 umfasst.

6. Kommunikationsteilnehmer (5') nach Anspruch 5
**dadurch gekennzeichnet, dass** dieser zum Konfigurieren und Steuern des Datenbus (0) ausgebildet ist.

7. Verfahren zum Steuern des Datenaustauschs durch eine Vorrichtung nach einem der Ansprüche 1 bis 4 beziehungsweise eines Kommunikationsteilnehmer (5, 5') nach einem der Ansprüche 5 oder 6,
wobei Kommunikationsdaten im Ansprechen auf eine Steuereinrichtung (18, 19, 20, 24, 25) zum Auswählen von zu ersetzenden Kommunikationsdaten durch vorbestimmte, durch in einem Speicher (22) abgelegte Kommunikationsdaten ersetzt werden und
die Kommunikationsdaten im Ansprechen auf eine Steuereinrichtung (18, 19, 20, 24, 25) zum Auswählen von zu kopierenden Kommunikationsdaten kopiert und in einem Speicher (22) abgelegt werden **dadurch gekennzeichnet dass**
zwischen einem Kommunikationsdateneingang (26) und einem Kommunikationsdatenausgang (27) zumindest ein Schieberegister (8) zum Aufnehmen von Kommunikationsdaten angeordnet wird,
wobei die Einrichtung zum Kopieren von ausgewählten Kommunikationsdaten am Eingang des zumindest einen Schieberegisters (8) angeordnet und die Einrichtung zum Ersetzen von ausgewählten Kommunikationsdaten am Ausgang des Schieberegisters (8) angeordnet wird, und die Vorrichtung eingerichtet wird, ein Datentelegramm innerhalb eines Kommunikationsdatenzyklus abschnittsweise durch das zumindest eine Schieberegister (8) hindurchzuführen.

8. Verfahren nach Anspruch 7,
**dadurch gekennzeichnet, dass** die Vorrichtung, insbesondere die Steuereinrichtung zum Auswählen von zu ersetzenden Kommunikationsdaten und/oder die Steuereinrichtung zum Auswählen von zu kopierenden Kommunikationsdaten mittels empfangenen Kommunikationsdaten projektiert wird bzw. werden.

9. Verfahren nach Anspruch 8,
**dadurch gekennzeichnet, dass** die Arbeitsweise des Kommunikationsteilnehmers als Slave (2, 3, 4) oder als Master (5, 5') projektiert wird.

10. Verfahren nach Anspruch 8 oder 9,
**dadurch gekennzeichnet, dass** die Projektierung das Laden von Kommunikationsdaten in eine Steuertabelle (19) der Steuereinrichtung zum Auswählen von zu kopierenden Kommunikationsdaten und/oder das Laden von Kommunikationsdaten in die Steuertabelle (11) der Steuereinrichtung zum Auswählen von zu ersetzenden Kommunikationsdaten umfasst, wobei die Projektierung beider Steuereinrichtungen unabhängig voneinander erfolgt.

11. Verfahren nach einem der vorstehenden Ansprüche 7 bis 10, **dadurch gekennzeichnet, dass** zu Beginn eines Kommunikationsdatenzyklus die Ausgangsdaten des Kommunikationsteilnehmers gesendet und am Ende des Kommunikationsdatenzyklus die Eingangsdaten des Kommunikationsteilnehmers empfangen werden.

12. Verfahren nach einem der vorstehenden Ansprüche 7 bis 11, **dadurch gekennzeichnet, dass** in einem Id-Kommunikationszyklus zu Beginn ein ID-Code des Kommunikationsteilnehmers gesendet wird und die nachfolgend in dem Kommunikationszyklus hindurchgeführten ID-Daten kopiert werden.

13. Verfahren nach Anspruch 11 , **dadurch gekennzeichnet, dass** zu Beginn eines Kommunikationszyklus von dem Kommunikationsteilnehmer zuerst ID-Daten gesendet und am Ende des Kommunikationszyklus Steuerdaten empfangen werden.

14. Verfahren nach Anspruch 7, **dadurch gekennzeichnet, dass** in einem Kommunikationszykluss durch die Vorrichtung hindurchgeführte Kommunikationsdaten und/oder der Vorrichtung zugeführte Kommunikationsdaten im Ansprechen auf die Steuereinrichtung zum Auswählen von zu kopierenden Kommunikationsdaten kopiert und im Ansprechen auf die Steuereinrichtung zum Auswählen von zu ersetzenden Kommunikationsdaten ersetzt werden.

## Claims

1. Device for controlling the data exchange in a communication terminal of a serial master/slave communication system, comprising
- a control device for selecting communication data to be replaced,
- a device for replacing the selected communication data by communication data to be sent,
- a control device (18, 19, 20, 24, 25) for selecting communication data to be copied,
- a device (23, 21) for copying the selected communication data and
- a storage device (22) for storing copied communication data,
**characterised by** at least one shift register (8), arranged between a communication data input (26) and a communication data output (27), for receiving communication data,
wherein the device for copying selected communication data is arranged at the input of the at least one shift register (8) and the device for replacing selected communication data is arranged at the output of the shift register (8), and the device is set up to feed a data telegram within a communication data cycle in sections through the at least one shift register (8).

2. Device according to claim 1,
**characterised in that** the device is set up for operation in communication cycles and within a communication cycle a data telegram comprising communication data is sent in sections to this device and / or fed through it.

3. Device according to claim 1 or 2,
**characterised in that** the control device for selecting communication data to be replaced comprises
- a counter device (10)
- a control table (11) and
- a device (12) for comparing counter values with values stored in the control table, wherein in the control table data for fixing the communication data to be replaced are stored and with the counter device (10) the communication data fed through the device and / or fed to it are counted.

4. Device according to claim 1, 2 or 3,
**characterised by** a storage device (9) for storing communication data to be sent and a parallel / serial converter (17) for converting the stored data into bit-serial communication data.

5. Communication terminal (5, 5') of a serial master/slave communication system which comprises a device for controlling the data exchange according to one of the claims 1 to 4.

6. Communication terminal (5') according to claim 5,
**characterised in that** it is designed for configuring and controlling the data bus (0).

7. Method for controlling the data exchange through a device according to one of the claims 1 to 4 and a communication terminal (5, 5') according to one of the claims 5 to 6, wherein communication data are replaced, in response to a control device (18, 19, 20, 24, 25) for selecting communication data to be replaced, by predetermined communication data stored in a storage device (22) and the communication data are copied in response to a control device (18, 19, 20, 24, 25) for selecting communication data to be copied and stored in a storage device (22), **characterised in that**
at least one shift register (8) is arranged between a communication data input (26) and a communication data output (28) for receiving communication data, wherein the device for copying selected communication data is arranged at the input of the at least one shift register (8) and the device for replacing selected communication data is arranged at the output of the shift register (8), and the device is set up to feed a data telegram within a communication data cycle in sections through the at least one shift register (8).

8. Method according to claim 7,
**characterised in that** the device, particularly the control device for selecting communication data to be replaced and / or the control device for selecting communication data to be copied, is / are projected by means of communication data received.

9. Method according to claim 8,
**characterised in that** the mode of operation of the communication terminal is projected as a slave (2, 3, 4) or as a master (5, 5').

10. Method according to claim 8 or 9,
**characterised in that** the projecting comprises the loading of communication data into a control table (19) of the control device for selecting communication data to be copied and / or the loading of communication data into the control table (11) of the control device for selecting communication data to be replaced, wherein the two control devices are projected independently of each other.

11. Method according to one of the preceding claims 7 to 10, **characterised in that** at the beginning of a communication data cycle the output data of the communication terminal are sent and at the end of the communication data cycle the input data of the communication terminal are received.

12. Method according to one of the preceding claims 7 to 11, **characterised in that** in an ID communication cycle at the beginning an ID code of the communication terminal is sent and the ID data subsequently fed through in the communication cycle are copied.

13. Method according to claim 11, **characterised in that** at the beginning of a communication cycle ID data are firstly sent from the communication terminal and at the end of the communication cycle control data are received.

14. Method according to claim 7, **characterised in that** in a communication cycle communication data fed through the device and / or communication data fed to the device in response to the control device for selecting communication data to be copied are copied and in response to the control device for selecting communication data to be replaced are replaced.

## Revendications

1. Dispositif de commande de l'échange de données d'un participant à un système sériel de communication maître-esclave, comportant :
- un dispositif de commande servant à sélectionner des données de communication à remplacer,
- un dispositif servant à remplacer les données de communication sélectionnées par des données de communication à envoyer,
- un dispositif de commande (18, 19, 20, 24, 25) servant à sélectionner des données de communication à copier,
- un dispositif (23, 21) servant à copier les données de communication sélectionnées, et
- un dispositif formant mémoire (22) servant à mémoriser des données de communication copiées, **caractérisé par** au moins un registre à décalage (8) servant à enregistrer des données de communication et disposé entre une entrée de données de communication (26) et une sortie de données de communication (27),
le dispositif servant à copier des données de communication sélectionnées étant disposé à l'entrée du ou des registres à décalage (8) et le dispositif servant à remplacer des données de communication sélectionnées étant disposé à la sortie du registre à décalage (8), et l'appareil étant agencé de manière à faire passer à travers le ou les registres à décalage (8), par sections, un télégramme de données, et ce en l'espace d'un cycle de données de communication.

2. Dispositif selon la revendication 1,
**caractérisé en ce qu'**il est agencé pour fonctionner dans des cycles de communication et **en ce qu'**on lui applique et/ou on le fait traverser par, par sections, un télégramme de données comprenant des données de communication, et ce en l'espace d'un cycle de communication.

3. Dispositif selon la revendication 1 ou 2,
**caractérisé en ce que** la commande servant à sélectionner des données de communication à remplacer comporte :
- un dispositif formant compteur (10),
- un tableau de commande (11), et
- un dispositif (12) servant à comparer des valeurs de compteur à des valeurs placées en mémoire dans le tableau de commande, des données servant à définir les données de communication à remplacer étant placées en mémoire dans le tableau de commande et les données de communication que l'on fait passer à travers l'appareil et/ou qui lui sont amenées étant comptées avec le dispositif formant compteur (10).

4. Dispositif selon la revendication 1, 2 ou 3,
**caractérisé par** un équipement formant mémoire (9) servant à mémoriser des données de communication à envoyer et par un convertisseur parallèle-sériel (17) servant à transformer les données mémorisées en données de communication binaires sérielles.

5. Terminal participant (5, 5') à un système sériel de communication maître-esclave, lequel comprend un dispositif selon l'une des revendications 1 à 4 pour la commande de l'échange de données.

6. Terminal participant (5') selon la revendication 5, **caractérisé en ce qu'**il est formé pour configurer et commander le bus de données (0).

7. Procédé de commande de l'échange de données par un dispositif selon l'une des revendications 1 à 4 ou un participant communicateur (5, 5') selon l'une des revendications 5 ou 6,
des données de communication étant remplacées, en réponse à un dispositif de commande (18, 19, 20, 24, 25) servant à sélectionner des données de communication à remplacer, par des données de communication prédéterminées placées en mémoire dans une mémoire (22) et les données de communication étant copiées et placées en mémoire dans une mémoire (22) en réponse à un dispositif de commande (18, 19, 20, 24, 25) servant à sélectionner des données de communication à copier, **caractérisé en ce que**
au moins un registre à décalage (8) servant à enregistrer des données de communication est disposé entre une entrée de données de communication (26) et une sortie de données de communication (27),
le dispositif servant à copier des données de communication sélectionnées étant disposé à l'entrée dudit au moins un registre à décalage (8) et le dispositif servant à remplacer des données de communication sélectionnées étant disposé à la sortie du registre à décalage (8), et **en ce que** le dispositif est agencé pour faire passer un télégramme de données à travers le ou les registres à décalage (8) par sections, et ce en l'espace d'un cycle de données de communication.

8. Procédé selon la revendication 7,
**caractérisé en ce que** l'appareil, notamment le dispositif de commande servant à sélectionner des données de communication à remplacer et/ou le dispositif de commande servant à sélectionner des données de communication à copier, sont programmées au moyen de données de communication reçues.

9. Procédé selon la revendication 8,
**caractérisé en ce que** le mode de fonctionnement du participant communicateur est programmé comme esclave (2, 3, 4) ou comme maître (5, 5').

10. Procédé selon la revendication 8 ou 9,
**caractérisé en ce que** la programmation comprend le chargement de données de communication dans un tableau de commande (19) du dispositif de commande servant à sélectionner des données de communication à copier et/ou le chargement de données de communication dans le tableau de commande (11) du dispositif de commande servant à sélectionner des données de communication à remplacer, les programmations des deux dispositifs de commande ayant lieu indépendamment l'une de l'autre.

11. Procédé selon l'une des revendications précédentes 7 à 10,
**caractérisé en ce que** les données de sortie du terminal participant sont envoyées au début d'un cycle de données de communication et **en ce que** les données d'entrée du terminal participant sont reçues à la fin du cycle de données de communication.

12. Procédé selon l'une des revendications précédentes 7 à 11,
**caractérisé en ce que**, au cours d'un cycle de communication d'identification, on envoie au début un code d'identification du participant et on copie les données d'identification qui ont été transmises subséquemment au cours du cycle de communication.

13. Procédé selon la revendication 11,
**caractérisé en ce que**, au début d'un cycle de communication, le terminal participant envoie tout d'abord des données d'identification et **en ce que**, à la fin du cycle de communication, il reçoit des données de commande.

14. Procédé selon la revendication 7,
**caractérisé en ce que**, au cours d'un cycle de communication, des données de communication que l'on a fait passer à travers le dispositif et/ou des données de communication que l'on a amenées au dispositif sont copiées en réponse au dispositif de commande servant à sélectionner des données de communication à copier et sont remplacées en réponse au dispositif de commande servant à sélectionner des données de communication à remplacer.
